# EUROPEAN PATENT APPLICATION

(11) **EP 4 063 444 A1**
(43) Date of publication of application: **28.09.2022**
(21) Application number: 21164182.4
(22) Date of filing: 23.03.2021
(51) Int. Cl.: C08K 3/32, B29C 64/153, C08K 3/105, C08L 75/04, A01K 11/00

(54) **TPU WITH COPPER AS IR ABSORBER AND 3D PRINTING PROCESS EMPLOYING SUCH A TPU**

(71) Applicant: Covestro Deutschland AG, 51373 Leverkusen (DE)
(72) Inventor: The designation of the inventor has not yet been filed
(74) Representative: Davepon, Björn

(57) **Abstract**

A thermoplastic polyurethane comprises a copper compound, wherein copper is present in the polyurethane in an amount of ≥ 10 ppm to ≤ 1500 ppm, based on the total weight of the polyurethane, the polyurethane is free from antimony and the polyurethane is free from bismuth, with the exception of bismuth originating from bismuth carboxylates. In an additive manufacturing process comprising fusing layers of a thermoplastic polyurethane build material by irradiating the polyurethane with a laser according to pre-determined cross-sections of an article, the laser emits a light with a wavelength of ≥ 1060 nm to ≤ 1070 nm and in the polyurethane copper is present in the polyurethane in an amount of ≥ 10 ppm to ≤ 1500 ppm, based on the total weight of the polyurethane.

## Description

The present invention concerns a copper-containing thermoplastic polyurethane (TPU) and an additive manufacturing process employing such a TPU as a build material.

The labeling of livestock with thermoplastic polyurethane ear marks or tags is widely practiced. Identifying information can be inscribed into the TPU by charring with a laser. For example, WO 2011/083100 A1 discloses a transparent polyurethane which can be written on by means of high-energy radiation and which contains a bismuth oxide as a contrast medium. The bismuth oxide has an average grain size of <1.5 µm. Preferably this polyurethane is a TPU.

WO 2018/150033 A1 relates to a laser-markable plastic comprising a thermoplastic polymer, bismuth oxide and a co-absorbing additive selected from the group consisting of platelet-shaped silicates and inorganic copper-, cobalt-, aluminum or iron-containing pigments, wherein the amount of the co-absorbing additive relative to the bismuth oxide is from 2 to 80 wt.-%. The experimental section discloses the use of a copper hydroxy phosphate with the trademark name Fabulase^{®} 361 as a co-absorbing additive.

US 2008/004363 A1 discloses laser-weldable polymers which consist of a laser-transparent part and a laser-absorbent part and can be welded to one another by means of laser light and are distinguished by the fact that the laser-absorbent part comprises, as absorber, copper hydroxide phosphate and/or copper phosphate. According to a dependent claim the polymer can be a thermoplastic polyurethane. This published patent application states that the absorber is preferably added to the laser-transparent polymer part in amounts of 0.001-2% by weight, in particular 0.01-1% by weight and very particularly preferably 0.05-0.5% by weight, based on the polymer part.

US 5,630,979 is directed towards a process for the inscription of moldings based on thermoplastic polyurethane elastomers or mixtures of thermoplastic polyurethane elastomers with up to 45% by weight based on the total weight of polymers, of further thermoplastics, by means of high-energy radiation, wherein the additives employed to improve the inscribability include a copper phosphate and an inorganic phyllosilicate. The amount of copper phosphate is stated to not be subject to any particular limitation but to be generally in the range from 0.02 to 5% by weight, preferably from 0.05 to 0.5% by weight, in particular from 0.05 to 0.18% by weight, based on the total weight of polymer.

Selective laser sintering (SLS) and fused deposition modeling (FDM, also FFF) processes are established additive manufacturing ("3D printing") methods. Thermoplastic polyurethanes have also been reported as build materials, for example in US 2017/129177 A1 (use of thermoplastic polyurethane powders in powder-based additive manufacturing methods for the production of elastic articles). WO 2015/109141 A1 relates to systems and methods for solid freeform fabrication, especially fused deposition modeling, as well as various articles made using the same, where the systems and methods utilize certain thermoplastic polyurethanes which are said to be particularly suited for such processing.

In additive manufacturing a transition to lasers of the Nd:YAG type which provide laser light at a nominal wavelength of 1064 nm is observed. Then different IR absorbers than customary borides, carbon black and the like are needed in the build material. The present invention has the object of providing a TPU build material suitable for this laser type and an additive manufacturing method employing such a TPU.

This object is achieved by a TPU according to claim 1 and a method according to claim 6. The use of such a TPU as a build material is the subject of claim 14. Advantageous embodiments are the subject of the dependent claims. They may be combined freely unless the context clearly indicates otherwise.

In a thermoplastic polyurethane comprising a copper compound, copper is present in the polyurethane in an amount of ≥ 10 ppm to ≤ 1500 ppm, based on the total weight of the polyurethane, the polyurethane is free from antimony and the polyurethane is free from bismuth, with the exception of bismuth originating from bismuth carboxylates.

In an additive manufacturing process comprising fusing layers of a thermoplastic polyurethane build material by irradiating the polyurethane with a laser according to pre-determined cross-sections of an article, the laser emits a light with a wavelength of ≥ 1060 nm to ≤ 1070 nm and in the polyurethane copper is present in the polyurethane in an amount of ≥ 10 ppm to ≤ 1500 ppm, based on the total weight of the polyurethane.

It has surprisingly been found that TPUs with such low amounts of copper IR absorber can be used as build materials in CO₂, Nd:YAG or ytterbium (fiber) laser-assisted additive manufacturing processes without the (intended) discoloration customary in the cow ear tag marking technology. In particular, bismuth oxides are excluded from the TPU according to the invention.

It is understood that the stated amounts of metals relate to metal atoms or ions, i.e. without accompanying ligands or the like of metal compounds.

The absence of antimony is an added benefit from an environmental and recyclability standpoint.

In the context of the present invention the term "free from" is meant to include technically unavoidable impurities but exclude the deliberate addition of Sb and Bi compounds. For example, "free from" can be understood as less than 1 ppm Sb and less than 1 ppm Bi, based on the total weight of the polyurethane. The Cu, Sb and Bi contents can be determined by atomic absorption spectroscopy (AAS), if so desired. In practice a TPU formulator will be able to calculate the Cu contents from the recipe for the TPU formulation.

An exception is made for bismuth originating from bismuth carboxylates. Such carboxylates can be used as urethane catalysts and may be present in the TPU; they are not active as IR absorbers.

The TPU may also be free from inorganic phyllosilicates such as mica in order to provide a transparent or translucent 3D printed article. If so desired, the TPU may be colored by the addition of dyestuffs, for example.

In an embodiment of the polyurethane or the process the copper is present in an amount of ≥ 40 ppm to ≤ 500 ppm. Preferred are amounts of ≥ 50 ppm to ≤ 250 ppm.

In another embodiment of the polyurethane or the process the copper is present as copper(II) hydroxide phosphate. Particular preference is given to a compound having the empirical chemical formula Cu₃(PO₄)₂ · Cu(OH)₂, the mineral of which is known as libethenite.

In another embodiment of the polyurethane it is in the form of a powder having an average powder size (dso) of ≤ 200 µm or in the form of a filament having a diameter of ≤ 5 mm. More preferred are average powder sizes (dso) of ≤ 150 µm and filament diameters of ≤ 3 mm.

In another embodiment of the polyurethane or the process the polyurethane is an aromatic polyesterpolyol-polyetherpolyol polyurethane. In general, TPUs suitable for the present invention can be synthesized by reacting a) at least one organic diisocyanate with b) at least one compound having groups which are reactive toward isocyanate groups and a number average molecular weight (Mn) of from 500 g/mol to 6000 g/mol and a number average functionality of the totality of the components under b) of from 1.8 to 2.5 and with c) at least one chain extender having a number average molecular weight (Mₙ) of from 60 to 450 g/mol and a number average functionality of the totality of the chain extenders under c) of from 1.8 to 2.5.

Preference is given to using hexamethylene 1,6-diisocyanate, cyclohexane 1,4-diisocyanate, isophorone diisocyanate, dicyclohexylmethane diisocyanate, diphenylmethane diisocyanate isomer mixtures having a diphenylmethane 4,4'-diisocyanate content of more than 96% by weight and in particular diphenylmethane 4,4'-diisocyanate and naphthylene 1,5-diisocyanate.

As relatively long-chain isocyanate-reactive compounds under b), mention may be made by way of example of ones having an average of from at least 1.8 to 3.0 Zerewitinoff-active hydrogen atoms and a number average molecular weight of from 500 to 10 000 g/mol. These include compounds bearing not only amino groups but also thiol groups or carboxyl groups, in particular compounds having from two to three, preferably two, hydroxyl groups, especially those having number average molecular weights Mₙ of from 500 to 6000 g/mol, particularly preferably those having a number average molecular weight Mₙ of from 600 to 4000 g/mol, e.g. hydroxyl-containing polyester polyols, polyether polyols, polycarbonate polyols and polyester polyamides.

With respect to chain extenders c), preference is given to using aliphatic diols having from 2 to 14 carbon atoms, e.g. ethanediol, 1,2-propanediol, 1,3-propanediol, 1,4-butanediol, 2,3-butanediol, 1,5-pentanediol, 1,6-hexanediol, diethylene glycol and dipropylene glycol.

The relative amounts of isocyanate groups and groups which are reactive toward isocyanate are preferably selected so that the ratio is from 0.9:1 to 1.2:1, preferably from 0.95:1 to 1.1:1.

In embodiment of the process the process is a selective laser powder sintering process.

In another embodiment of the process the process is a fused deposition modeling process. The laser can assist in the deposition of the molten material from the print head by irradiating the surface of the TPU layer onto which the molten material is to be deposited.

In another embodiment of the process the laser is operated at a power of ≤ 501 W. Preferred is a power of ≤ 250 W.

In another embodiment of the process the polyurethane is free from antimony and the polyurethane is free from bismuth, with the exception of bismuth originating from bismuth carboxylates. The exception is made for bismuth originating from bismuth carboxylates as such carboxylates can be used as urethane catalysts and may be present in the TPU and they are not active as IR absorbers.

The TPU may also be free from inorganic phyllosilicates such as mica in order to provide a transparent or translucent 3D printed article. If so desired, the TPU may be colored by the addition of dyestuffs, for example.

Another aspect of the invention is the use of a polyurethane according to the invention as a build material in an additive manufacturing process. Preferably the polyurethane is in the form of a powder having an average powder size (dso) of ≤ 200 µm or in the form of a filament having a diameter of ≤ 5 mm. More preferred are average powder sizes (dso) of ≤ 150 µm and filament diameters of ≤ 3 mm.

The present invention will be further described with reference to the following examples and figure without wishing to be limited by them. The TPU used was an aromatic extrusion- and injection molding grade polyesterpolyol-polyetherpolyol polyurethane having a Shore A hardness of ca. 77. The masterbatch was a masterbatch based on a universal polymer carrier containing 40 weight-% of copper(II) hydroxide phosphate-IR absorber. Compounded TPU was obtained by compounding the TPU and the masterbatch to yield a product with 50 ppm (weight/weight) of copper. No bismuth compounds were present in the TPU or the masterbatch.

Powder 1 was produced by cryogrinding the uncompounded TPU to an average particle size (d₅₀) of 137 µm. Powder 2 was produced by cryogrinding the compounded TPU to an average particle size (d₅₀) of 130 µm.

To test the effect of the formulation of powder 2 in comparison to the pure TPU powder 1 for laser sintering applications, both powders were each knife coated onto a glass plate (layer height = 3000 µm) and applied to a fiber laser system.

For the experiments a fiber laser device with a Nd:YAG (1064 nm, 12 W) laser source was used (manufacturer: ACI Laser GmbH, Germany; type: DPL Nexus Marker) and operated by applying a constant laser power output of 12W and other fixed properties shown in Table 1.

**Table 1: Fixed parameters of test setup**

| **Parameter** | **Unit** | **Value** |
|---|---|---|
| Laser power | W | 12 |
| Pulse duration | ns | 30 |
| Hatch distance | mm | 0,3 |
| Diameter of laser spot | µm I | 35 |

In order to evaluate the enhanced sintering properties of Powder 1 vs. Powder 2, the glass plates with the powder layers were exposed to different laser intensities, controlled by adjusting both laser pulse frequency and laser speed as shown in Table 2.

**Table 2: Variable parameters of test setup, resulting laser power of pulse**

| **Pulse frequency [Hz]** | **Dots per inch** | | | | | | | **Power density of pulse [W/m²]** | **Power of pulse [W]** |
|---|---|---|---|---|---|---|---|---|---|
| 6300 | 8001 | 6001 | 4801 | 4000 | 3429 | 3000 | 2667 | 6.6E+13 | 63492 |
| 5467 | 6943 | 5207 | 4166 | 3471 | 2975 | 2603 | 2314 | 7,6E+13 | 73171 |
| 4633 | 5884 | 4413 | 3531 | 2942 | 2522 | 2207 | 1961 | 9,0E+13 | 86331 |
| 3800 | 4826 | 3620 | 2896 | 2413 | 2068 | 1810 | 1609 | 1.1E+14 | 105263 |
| 2967 | 3768 | 2826 | 2261 | 1884 | 1615 | 1413 | 1256 | 1.4E+14 | 134831 |
| 2133 | 2709 | 2032 | 1626 | 1355 | 1161 | 1016 | 903 | 1.9E+14 | 187500 |
| 1300 | 1651 | 1238 | 991 | 826 | 708 | 619 | 550 | 3.2E+14 | 307692 |
| | 20 | 27 | 33 | 40 | 47 | 53 | 60 | | |
| | **Laser speed [mm/s]** | | | | | | | | |

The process settings were applied by shaping a 7 x 7-matrix pattern of equally sized square fields. The overall size of the matrix pattern was 30 mm x 30 mm Each square of the matrix pattern was shaped by applying the settings described in Table 1 for each pair out of laser speed and pulse frequency, respectively.

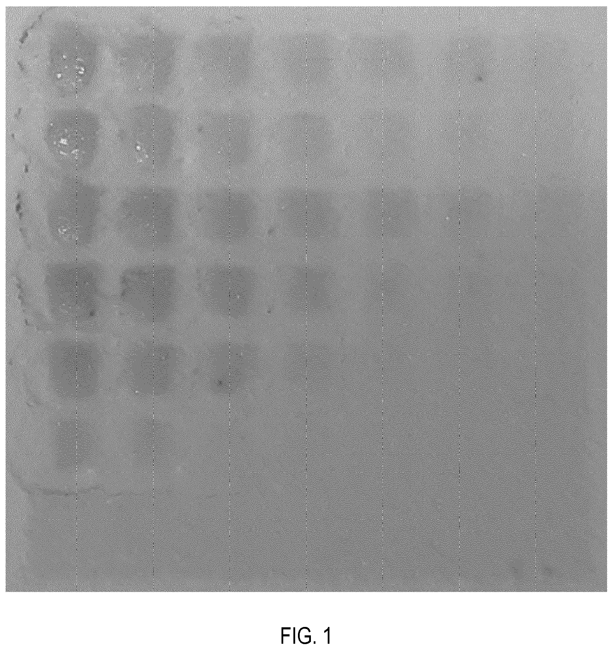

The experiment with powder 1 showed no visible sintering at all. Results of the experiment with powder 2 are depicted in FIG. 1. Results consistent with the requirements for 3D printing via laser sintering were defined as uniformly sintered, transparent or translucent, not discolored material with sharp edges of the squares that the laser source had melted into the powder layer. These are indicated as underlined in Table 2.

## Claims

1. A thermoplastic polyurethane comprising a copper compound,
**characterized in that**
copper is present in the polyurethane in an amount of ≥ 10 ppm to ≤ 1500 ppm, based on the total weight of the polyurethane,
the polyurethane is free from antimony and
the polyurethane is free from bismuth, with the exception of bismuth originating from bismuth carboxylates.

2. The polyurethane according to claim 1, wherein the copper is present in an amount of ≥ 40 ppm to ≤ 500 ppm.

3. The polyurethane according to claim 1 or 2, wherein the copper is present as copper(II) hydroxide phosphate.

4. The polyurethane according to any one of the preceding claims, wherein the polyurethane is in the form of a powder having an average powder size (d₅₀) of ≤ 200 µm or in the form of a filament having a diameter of ≤ 5 mm.

5. The polyurethane according to any one of the preceding claims, wherein the polyurethane is an aromatic polyesterpolyol-polyetherpolyol polyurethane.

6. An additive manufacturing process comprising fusing layers of a thermoplastic polyurethane build material by irradiating the polyurethane with a laser according to pre-determined cross-sections of an article,
**characterized in that**
the laser emits a light with a wavelength of ≥ 1060 nm to ≤ 1070 nm and
that in the polyurethane copper is present in the polyurethane in an amount of ≥ 10 ppm to ≤ 1500 ppm, based on the total weight of the polyurethane.

7. The process according to claim 6, wherein the process is a selective laser powder sintering process.

8. The process according to claim 6, wherein the process is a fused deposition modeling process.

9. The process of any one of claims 6 to 8, wherein the laser is operated at a power of ≤ 501 W.

10. The process of any one of claims 6 to 9, wherein the copper is present in the polyurethane in an amount of ≥ 40 ppm to ≤ 500 ppm.

11. The process of any one of claims 6 to 10, wherein the copper is present in the polyurethane as copper(II) hydroxide phosphate.

12. The process of any one of claims 6 to 11, wherein the polyurethane is an aromatic polyesterpolyol-polyetherpolyol polyurethane.

13. The process of any one of claims 6 to 12, the polyurethane is free from antimony and the polyurethane is free from bismuth, with the exception of bismuth originating from bismuth carboxylates.

14. Use of a polyurethane according to any one of claims 1 to 5 as a build material in an additive manufacturing process.

15. The use according to claim 14, wherein the polyurethane is in the form of a powder having an average powder size (d₅₀) of ≤ 200 µm or in the form of a filament having a diameter of ≤ 5 mm.
